# EUROPEAN PATENT APPLICATION

(11) **EP 4 764 815 A1**
(43) Date of publication of application: **24.06.2026**
(21) Application number: 24853589.0
(22) Date of filing: 02.08.2024
(51) Int. Cl.: G06F 3/14

(54) **INFORMATION DISPLAY METHOD AND APPARATUS, AND DEVICE AND STORAGE MEDIUM**

(30) Priority: 14.08.2023 CN 202311022188
(71) Applicant: Beijing Zitiao Network Technology Co., Ltd., Beijing 100190 (CN)
(72) Inventor: LI, Xuan, Beijing 100028 (CN); XU, Jinping, Beijing 100028 (CN); YANG, Fan, Beijing 100028 (CN); WANG, Chuncheng, Beijing 100028 (CN)
(74) Representative: Grünecker Patent- und Rechtsanwälte PartG mbB
(86) International application number: PCT/CN2024/109608
(87) International publication number: WO 2025/036177

(57) **Abstract**

Embodiments of the disclosure provide a method, an apparatus, a device, and a storage medium for information display. The method includes: displaying a target virtual scene via a display generation component, where the target virtual scene includes a target object; and displaying, in response to a preset operation instruction input via one or more input components, a real environment where a user is currently located via the display generation component, and presenting the target object in the real environment. Embodiments of the disclosure may realize accurate switching and displaying of the target object from the target virtual scene to the real environment, such that the target object in the target virtual scene may enter the real environment to interact with the user, thereby ensuring the diversity of interactive scenes of the user with respect to the target object, enhancing the interactive interest between the target object and the user, and improving the immersive interactive experience of the user with respect to the target object in the real environment.

## Description

This application claims priority to Chinese Patent Application No. 202311022188.5, filed on August 14, 2023, and entitled "METHOD AND APPARATUS, DEVICE, AND STORAGE MEDIUM FOR INFORMATION DISPLAY", which is incorporated herein by reference in its entirety.

### FIELD

Embodiments of the present disclosure relate to the field of data processing technologies, and in particular, to a method, an apparatus, a device, and a storage medium for information display.

### BACKGROUND

**In** a virtual reality scenario, the virtual reality technology may allow a user to immerse in various virtual scene images. For example, the user may experience a real virtual interactive scene by wearing a head mounted display (HMD).

Generally, a corresponding video stream may be directly played on the screen of a 3D video viewing area in a virtual space to present a corresponding virtual scene image in the virtual space, which renders the display effect of the virtual scene relatively monotonous and lacks certain interactive interest.

### SUMMARY

Embodiments of the present disclosure provide a method, an apparatus, a device, and a storage medium for information display, which enable accurate scene switching of a target object from a target virtual scene to a real environment, ensuring the diversity of interactive scenes of a user with respect to the target object.

According to a first aspect, an embodiment of the present disclosure provides a method for information display, which is applied to an electronic device in communication with a display generation component and one or more input components. The method includes displaying a target virtual scene via the display generation component, where the target virtual scene includes a target object; and displaying, in response to a preset operation instruction input via the one or more input components, a real environment where a user is currently located via the display generation component, and presenting the target object in the real environment.

According to a second aspect, an embodiment of the present disclosure provides an apparatus for information display, which is configured on an electronic device in communication with a display generation component and one or more input components. The apparatus includes: a virtual scene display module configured to display a target virtual scene via the display generation component, where the target virtual scene includes a target object; and a real environment display module configured to display, in response to a preset operation instruction input via the one or more input components, a real environment where a user is currently located via the display generation component, and present the target object in the real environment.

According to a third aspect, an embodiment of the present disclosure provides an electronic device. The electronic device includes a processor and a memory. The memory is configured to store a computer program, and the processor is configured to invoke and execute the computer program stored in the memory to perform the method for information display provided in the first aspect of the present disclosure.

According to a fourth aspect, an embodiment of the present disclosure provides a computer-readable storage medium configured to store a computer program, where the computer program causes a computer to perform the method for information display provided in the first aspect of the present disclosure.

According to a fifth aspect, an embodiment of the present disclosure provides a computer program product including a computer program/instruction, where the computer program/instruction causes a computer to perform the method for information display provided in the first aspect of the present disclosure.

### BRIEF DESCRIPTION OF DRAWINGS

In order to more clearly explain the technical solutions in the embodiments of the present disclosure, the drawings required in the description of the embodiments will be briefly introduced below. Obviously, the drawings in the following description are only some embodiments of the present disclosure, and for those skilled in the art, other drawings may be obtained according to these drawings without creative efforts.
FIG. 1 is a flowchart of a method for information display provided by an embodiment of the present disclosure;
FIG. 2 is a schematic diagram of a principle of switching a target virtual scene to a real environment via a display generation component provided by an embodiment of the present disclosure;
FIG. 3 is a flowchart of a method for information display provided by a further embodiment of the present disclosure;
FIG. 4 is a schematic diagram of the principle of a safety zone divided in a real environment provided by an embodiment of the present disclosure;
FIG. 5 is a flowchart of a process for determining a presentation position of a target object in a real environment provided by an embodiment of the present disclosure;
FIG. 6 is a flowchart of a process for determining a presentation position of a target object in a real environment provided by a further embodiment of the present disclosure;
FIG. 7 is a flowchart of a process for presenting a target object in a real environment provided by an embodiment of the present disclosure;
FIG. 8 is a schematic diagram of an apparatus for information display provided by an embodiment of the present disclosure; and
FIG. 9 is a schematic block diagram of an electronic device provided by an embodiment of the present disclosure.

### DETAILED DESCRIPTION

The technical solutions in the embodiments of the present disclosure will be clearly and completely described below with reference to the drawings in the embodiments of the present disclosure. Obviously, the described embodiments are only part of the embodiments of the present disclosure, not all of them. Based on the embodiments in the present disclosure, all other embodiments obtained by those skilled in the art without creative efforts belong to the protection scope of the present disclosure.

It should be noted that the terms "first", "second", etc. in the description, claims and drawings of the present disclosure are used to distinguish similar objects, but not necessarily to describe a specific order or sequence. It should be understood that the data so used may be interchanged in appropriate circumstances such that the embodiments of the present disclosure described herein may be implemented in orders other than those illustrated or described herein. In addition, the terms "include" and "have" and any of their variations are intended to cover non-exclusive inclusion. For example, a process, method, system, product or server that includes a series of steps or units is not necessarily limited to those steps or units that are clearly listed, but may include other steps or units that are not clearly listed or are inherent to such process, method, product or device.

**In** the embodiments of the present disclosure, words such as "as an example" or "for example" are used as examples, illustrations or illustrations. Any embodiment or solution described as " as an example" or "for example" in the embodiments of the present disclosure should not be interpreted as being more preferred or advantageous than other embodiments or solutions. Rather, the use of words such as "as an example" or "for example" is intended to present relevant concepts in a specific way.

Before introducing the specific technical solutions of the present disclosure, the application scenarios of the present disclosure are first explained accordingly:

In order to realize information display in a virtual reality scenario, the present disclosure may display a corresponding virtual scene through a display generation component communicating with any electronic device. The electronic device may be any extended reality (XR) device, which may specifically include a virtual reality (VR) device, an augmented reality (AR) device, a mixed reality (MR) device, etc., which is not limited in the present disclosure.

The display generation component may be any display screen or the like that establishes a communication connection with the electronic device. For example, the display generation component may be a display screen configured on a VR device, an AR device or an MR device, which is not limited in the present disclosure.

Moreover, in order to realize normal interaction of a user in the virtual reality scenario, in the present disclosure, one or more input components communicating with the electronic device may be used to initiate a corresponding interactive operation on the virtual scene displayed by the display generation component, thereby supporting the user to perform various interactions in the virtual scene.

The one or more input components may be any control device, information collection module, etc. that establish communication connections with the electronic device. For example, the one or more input components may be a handle configured on a VR device, an AR device or an MR device, or a collection module for detecting hand operations and eye movement information, or a voice collector for collecting voice information of the user, etc., which is not limited in the present disclosure.

At present, in order to solve the problem that the scene display effect is relatively monotonous after the user enters any virtual scene, the inventive concept of the present disclosure is as follows. For a target virtual scene displayed via the display generation component, a scene switching function may be set. Then, through the preset operation instruction input via the one or more input components, the target virtual scene to be switched and displayed as the real-world environment where the user is currently located via the display generation component, and the target object in the target virtual scene is presented in the real environment, thereby realizing accurate switching and displaying of the target object from the target virtual scene to the real environment, enabling the target object in the target virtual scene to enter the real environment to interact with the user, and ensuring the diversity of interactive scenes of the user with respect to the target object.

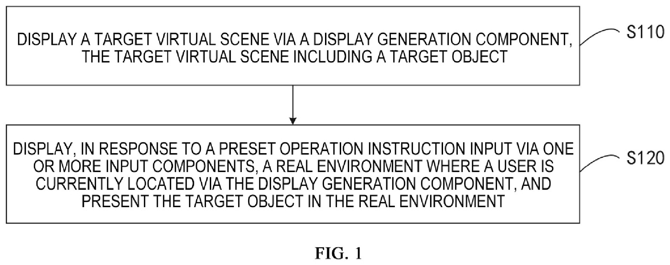

FIG. 1 is a flowchart of a method for information display provided by an embodiment of the present disclosure. The method may be applied to an electronic device in communication with a display generation component and one or more input components, but is not limited thereto. The method may be performed by an apparatus for information display provided by the present disclosure, where the information display apparatus may be implemented by any software and/or hardware means. For example, the information display apparatus may be configured on an electronic device, such as an AR/VR/MR device, that may simulate a virtual scene. The present disclosure does not impose any limitation on the specific type of the electronic device.

Specifically, as shown in FIG. 1, the method may include the following steps. At block S110, a target virtual scene is displayed via the display generation component, where the target virtual scene includes a target object.

In the present disclosure, in order to display various information in a virtual reality scenario, a display component that supports to communicate with the electronic device may usually be used to display the corresponding virtual reality scenario. The display generation component may be any display screen, such as a display screen configured on a VR device, an AR device or an MR device.

Moreover, the target virtual scene may be a corresponding virtual environment simulated for a certain interactive scene selected by any user, so as to display corresponding interactive operation information in the target virtual scene. For example, the target virtual scene may be a three-dimensional (3D) live streaming scene image of any live streaming room.

The target virtual scene may be an emulation environment of the real world, or a semi-simulated and semi-fictional virtual scene, or a purely fictional virtual scene.

In order to realize normal interaction of a user in the target virtual scene, the target virtual scene may include various types of virtual objects. In the present disclosure, the target object may be a certain virtual object, such as a virtual human and a virtual prop, in the target virtual scene that has a specific interaction requirement with the user.

Generally, after enabling the virtual reality interaction function of the electronic device, the user may first select a virtual scene as the target virtual scene. Then, the target virtual scene is displayed through the display generation component, allowing the user to enter the target virtual scene.

Various types of virtual objects, including but not limited to the target object in the present disclosure, may be presented in the target virtual scene, to support the user to interact with the target object accordingly.

As an optional implementation in the present disclosure, the target virtual scene in the present disclosure may be a live video stream of any live streaming room, and the live video stream may be a 3D video stream of 180°.

Then, for the target virtual scene displayed via the display generation component, if the user wants to view live content of a certain live streaming room in the virtual space, the user may select the live streaming room from multiple live streaming room in the virtual space, and enter it to view the live streaming.

Therefore, when detecting a selection instruction of any live streaming room in the virtual space, it indicates that the user currently wants to view the live content of the live streaming room in the virtual space. Therefore, in response to the selection instruction of the any live streaming room, a live video stream of the live streaming room may be obtained. Then, the live video stream of the live streaming room may be played via the display generation component to present the live content of the live streaming room in a 3D viewing area of the virtual space, allowing the user to enter the target virtual scene of the live streaming room and experience the immersive sense of the 3D space and stereoscopic effect in the target virtual scene.

In some implementations, in order to ensure the convenience of interaction in the target virtual scene, after the target virtual scene is displayed via the display generation component, a corresponding control screen and a public screen may also be set up for the user in the target virtual scene. The control screen may include various types of interactive controls, such as volume adjustment, live streaming room detail viewing, etc., such that the user may perform various control operations on respective virtual objects in the target virtual scene by triggering corresponding interactive controls. The public screen may be used to display messages, such as comments, bullet comments and so on, from audiences in the target virtual scene, facilitating interaction among the audiences in the target virtual scene.

At block S120, in response to a preset operation instruction input via the one or more input components, a real environment where a user is currently located is displayed via the display generation component, and the target object is presented in the real environment.

After the target virtual scene is displayed via the display generation component, in order to avoid the problem that the interactive effect of the target virtual scene is relatively monotonous, in the present disclosure, a scene switching function may be set in the target virtual scene to support each user to switch from the target virtual scene to different real scenes to interact with the same target object.

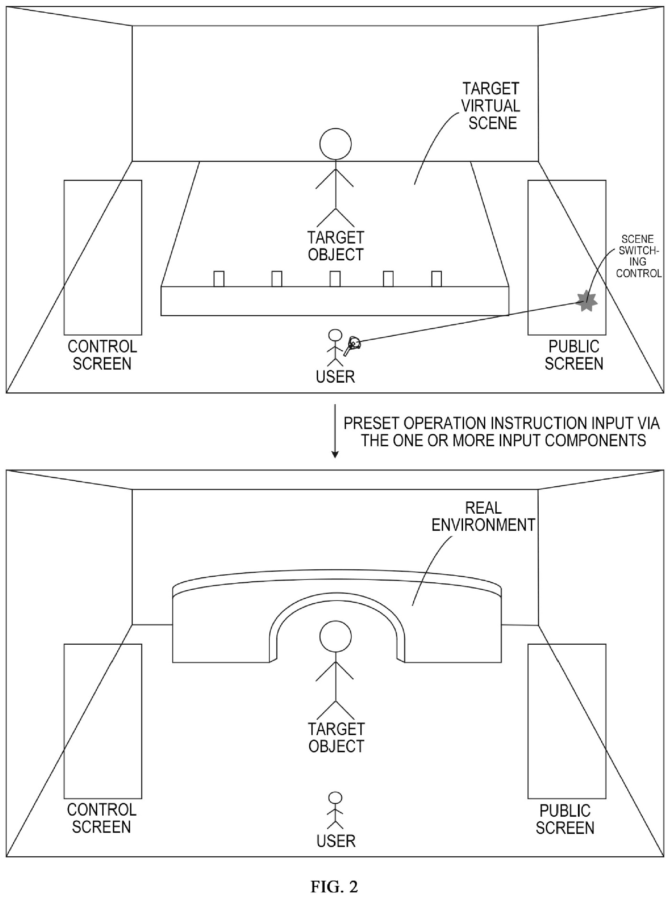

For example, as shown in FIG. 2, in the present disclosure, a scene switching control may be preset on the control screen or the public screen in the target virtual scene. The scene switching control may be used to diversify the display effect of the target virtual scene, and support switching from the single target virtual scene to real scenes where different users are located, such that each user may be immersed in his/her own real scene to perform corresponding interaction with the same target object.

For the scene switching function set in the target real scene, a corresponding scene switching request may be initiated by the preset operation instruction input via the one or more input components.

The preset operation instruction input via the one or more input components may include at least one of the followings.

1) A first operation instruction generated based on preset handle control information input via a user handle.

The user may manipulate a specific button or rocker on any handle communicatively connected to the electronic device to send corresponding handle control information to the electronic device. When the electronic device detects the preset handle control information input via the user handle, it indicates that the user currently wants to switch the scene of the target virtual scene. The corresponding first operation instruction may thus be generated.

2) A second operation instruction generated based on a preset gesture initiated by the user's hand and detected via a hand detection component.

The electronic device may be provided with corresponding hand detection components to detect various gesture information made by the user's hand in real time. For example, images of the user's hand may be captured in real time through a camera on the electronic device. Then, corresponding feature analysis may be performed on the hand image through the hand detection component, to recognize various gesture information initiated by the user's hand. When the hand detection component on the electronic device detects the preset gesture initiated by the user's hand, it indicates that the user currently wants to switch the scene of the target virtual scene. The corresponding second operation instruction may thus be generated.

3) A third operation instruction generated based on preset eye movement information initiated by the user's eyes and detected via an eye detection component, and a preset gesture initiated by the user's hand and detected via a hand detection component.

The electronic device may be provided with the corresponding eye detection component and hand detection component, to detect various eye movement information initiated by the user's eyes and various gesture information made by the user's hand, respectively. For example, images of the user's eyes and images of the user's hand may be captured in real time through the camera on the electronic device. Then, corresponding feature analysis may be performed on the eye images through the eye detection component to recognize various eye movement information initiated by the user's eyes. Moreover, corresponding feature analysis may be performed on the hand images through the hand detection component to recognize various gesture information initiated by the user's hand. When the eye detection component on the electronic device detects the preset eye movement information initiated by the user's eyes, and the hand detection component on the electronic device simultaneously detects the preset gesture initiated by the user's hand, it indicates that the user currently wants to switch the scene of the target virtual scene. The corresponding third operation instruction may thus be generated.

4) A fourth operation instruction generated based on preset voice information collected via any voice collection component.

Any voice collection component installed on the electronic device may collect audio data of the user in real time, and perform corresponding voice recognition on the audio data to recognize corresponding voice information. When the electronic device recognizes the preset voice information collected via the any voice collection component, it indicates that the user currently wants to switch the scene of the target virtual scene. The corresponding fourth operation instruction may thus be generated.

It should be understood that any of the first operation instruction, the second operation instruction, the third operation instruction and the fourth operation instruction may be a trigger instruction for the scene switching function in the target real scene.

Then, after the target virtual scene is displayed via the display generation component, various operation instructions input via the one or more input components may be detected in real time to determine whether there is a demand for scene switching in the target virtual scene.

When the preset operation instruction input via the one or more input components is detected, it indicates that there is currently demand for scene switching in the target virtual scene. Then, a video see-through (VST) function configured by the electronic device may be enabled to capture the real environment around the user in real time, thereby continuously capturing real environment images in the real scene where the user is located.

Then, the display generation component may stop displaying the target virtual scene, and instead display each real environment image captured in real time in the real scene where the user is located is displayed, such that the target virtual scene is switched and presented as the real environment where the user is currently located.

It should be understood that when the target virtual scene is switched and displayed as the real environment where the user is currently located via the display generation component, in order to ensure normal interaction of the user in the real environment, the control screen and the public screen in the target virtual scene will usually continue to be presented in the real environment, such that the user may continue to normally use various control and interaction functions of the target virtual scene.

By analyzing in real-time the position information of the user in the real environment, and then in the real environment displayed via the display generation component, the control screen and the public screen in the target virtual scene may continue to be presented to the user at a certain default relative position from the user, such that the control screen and the public screen in the target virtual scene may always be presented in front of the user, thereby facilitating convenient control and interaction of the user in the real environment.

After the target virtual scene is switched and displayed as the real environment where the user is currently located via the display generation component, in order to ensure normal interaction of the user in the real environment, the corresponding target object may be determined first from various virtual objects in the target virtual scene according to the user interaction requirement.

In some implementations, as shown in FIG. 2, the target object in the present disclosure may at least include a human object in the target virtual scene, such that the user may interact with various human objects (such as a live streamer in a certain live streaming room) in the real environment.

In order to ensure that the user can still interact with the target object in the target virtual scene after the target virtual scene is switched to the real environment, in the present disclosure, the target object in the virtual live streaming scene may be continuously projected into the switched and displayed real environment, such that the target object in the target virtual scene may be additionally presented in the real environment. In other words, it may support the target object to enter from the target virtual scene to the real environments where different users are currently located, such that users may interact with the same target object in their respective real environments, thereby ensuring the diversity of interactive scenes of the user with respect to the target object, and enhancing the interactive interest between the target object and the user.

In some implementations, if the target virtual scene is a live video stream of any live streaming room, the target object may be a target object image in a real-time live streaming frame of the live video stream.

In the present disclosure, the target object image may be determined by performing keying processing on the target object in the real-time live streaming frame of the live video stream to obtain the corresponding target object image.

That is, when the preset operation instruction input via the one or more input components is detected, for the live video stream of any live streaming room representing the target virtual scene, in the present disclosure, the live streaming frame at the current moment may be acquired in real time from the live video stream of the live streaming room, thereby obtaining the real-time live streaming frame in the present disclosure. Then, for each real-time live streaming frame, in the present disclosure, the corresponding target object image may be obtained by performing keying processing on the target object in the real-time live streaming frame.

In an embodiment, if the live video stream of any live streaming room is a binocular video stream obtained by a binocular camera through real-time shooting of a live streaming environment where a live streamer is located, the real-time live streaming frame of the live streaming room may be a left-eye video frame and a right-eye video frame collected at the same moment by a left-eye camera and a right-eye camera in the binocular video stream. Therefore, in the present disclosure, in response to detecting the preset operation instruction input via the one or more input components, keying processing may be performed on the target object in the left-eye video frame and the right-eye video frame collected by the binocular camera at the same moment for the live streaming environment where the streamer is located, so as to obtain a first target object image in the left-eye video frame and a second target object image in the right-eye video frame. Then, by fusing the first target object image and the second target object image at the same moment, the corresponding target object image may be obtained, such that the target object image may be a three-dimensional image.

According to the above method, the target object image corresponding to each real-time live streaming frame may be continuously obtained by fusing the two keyed target object images in the binocular video frame at each moment captured after detecting the preset operation instruction input via the one or more input components.

According to the technical solutions provided by the embodiments of the present disclosure, the target virtual scene is displayed via the display generation component, and when the preset operation instruction input via the one or more input components is detected, the target virtual scene may be switched and displayed as the real environment where the user is currently located via the display generation component, and the target object in the target virtual scene is displayed in the real environment, thereby realizing accurate switching and displaying of the target object from the target virtual scene to the real environment. It can enable the target object in the target virtual scene to enter the real environment to interact with the user, thereby ensuring the diversity of interactive scenes of the user with respect to the target object, enhancing the interactive interest between the target object and the user, and improving the immersive interactive experience of the user with respect to the target object in the real environment.

As an optional implementation in the present disclosure, after the target virtual scene is switched and displayed as the real environment where the user is currently located via the display generation component, in order to ensure accurate presentation of the target object in the real environment, in the present disclosure, it needs to accurately analyze the presentation position of the target object in the real environment, so as to explain the specific presentation process of the target object in the real environment.

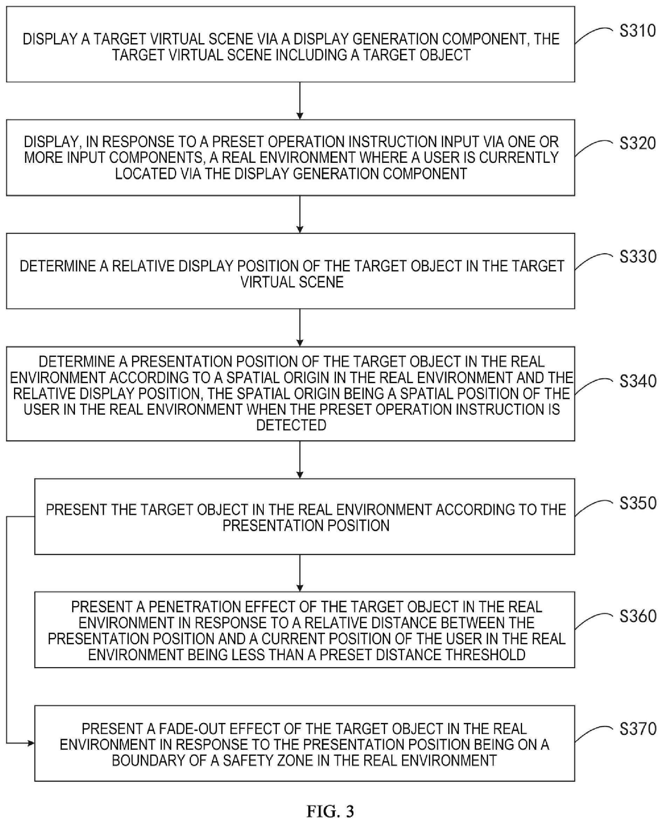

FIG. 3 is a flowchart of a method for information display provided by a further embodiment of the present disclosure. As shown in FIG. 3, the method may include the following steps.

At block S310, a target virtual scene is displayed via a display generation component, where the target virtual scene includes a target object.

At block S320, in response to a preset operation instruction input via one or more input components, a real environment where a user is currently located is displayed via the display generation component.

At block S330, a relative display position of the target object in the target virtual scene is determined.

After the target virtual scene is switched and displayed as the real environment via the display generation component, in order to ensure that the user may still normally interact with a certain target object in the target virtual scene, the target object in the target virtual scene is also required to appear in the real environment, so as to support the interaction between the user and the target object.

Therefore, in response to detecting the preset operation instruction input via the one or more input components, in the present disclosure, position information of the target object in the target virtual scene and position information of a virtual camera in the target virtual scene may be analyzed in real time to determine relative position information between the target object and the virtual camera in the target virtual scene, which may serve as the relative display position of the target object in the present disclosure.

In some embodiments, if the target virtual scene is a live video stream of any live streaming room, in the present disclosure, depth information of the target object in each real-time live streaming frame obtained from the detection of the preset operation instruction in the live video stream may be analyzed in real time to determine the relative position information between the target object and the virtual camera represented by a live streaming camera in the target virtual scene, thereby obtaining the relative display position of the target object in the present disclosure.

The relative display position of the target object may represent a relative position relationship between the target object and the live streaming camera in the live streaming scene where the live streamer is located.

At block S340, a presentation position of the target object in the real environment is determined according to a spatial origin in the real environment and the relative display position, where the spatial origin is a spatial position of the user in the real environment when the preset operation instruction is detected.

Whether in the target virtual scene displayed before switching via the display generation component or in the real environment displayed after switching via the display generation component, the user usually view various virtual objects from his/she own perspective. That is, the user may effectively function as the virtual camera in the target virtual scene. Therefore, when the preset operation instruction input via the one or more input components is detected, in addition to displaying the real environment where the user is currently located via the display generation component, it may further determine the spatial position of the user in the real environment when the preset operation instruction input via the one or more input components is detected. Then, considering that after the real environment is displayed via the display generation component, the user views the target object in the real environment from his/her own perspective, and the target object is displayed by the virtual camera in the target virtual scene, the spatial position of the user in the real environment when the preset operation instruction is detected may be used as the spatial origin in the real environment, to represent the virtual camera position in the target virtual scene.

Then, by analyzing the relative display position of the target object, the relative position relationship between the target object and the virtual camera may be determined. Then, based on the relative position relationship between the target object and the virtual camera, and in combination with the virtual camera position represented by the spatial origin in the real environment, the presentation position of the target object in the real environment may be determined.

It should be understood that the target object may move in real time in the target virtual scene, and when the real-time scene image of the target virtual scene is captured by the virtual camera, the position of the target object in the target virtual scene may also change relative to the virtual camera. After the preset operation instruction input via the one or more input components is detected, for the target object in the target virtual scene, the presentation position of the target object in the real environment may be determined by analyzing the relative position relationship between the target object and the virtual camera represented by the relative display position of the target object, on the basis of the virtual camera position represented by the spatial origin in the real environment.

At block S350, the target object is presented in the real environment according to the presentation position.

After the presentation position of the target object in the real environment is determined, the target object may be directly projected to the presentation position in the real environment displayed via the display generation component, thereby accurately presenting the target object in the real environment.

At block S360, in response to a relative distance between the presentation position and the user's current position in the real environment being less than a preset distance threshold, a penetration effect of the target object is presented in the real environment.

Since the target object may move in real time in the target virtual scene, the user may also move in real time in the real environment. Then, when the target object is presented in the real environment, motion contact between the user and the target object may occur.

Therefore, in order to improve the interaction effect between the user and the target object, in the present disclosure, the user's position in the real environment may be determined in real time as the user's current position in the real environment. Then, by comparing the relative distance between the presentation position of the target object in the real environment and the user's current position with the preset distance threshold, it may be determined whether the user and the target object touch each other due to being too close.

If the relative distance between the presentation position of the target object in the real environment and the user's current position is less than the preset distance threshold, it indicates that the user is too close to the target object, and a touch may occur. Therefore, in the present disclosure, when the target object is presented at the presentation position in the real environment, the penetration effect of the target object may be further presented. The penetration effect may include gradually increasing the transparency of the target object in the real environment, causing it to gradually become transparent, and presenting a prompt message of "you are too close to the target object" in the real environment to remind the user to stay away from the target object, thereby improving the effect of virtual interaction.

At block S370, in response to the presentation position being on a boundary of a safety zone in the real environment, a fade-out effect of the target object is presented in the real environment.

The target virtual scene may be a relatively closed virtual space environment, such as a real room where the live streamer is located during the live streaming, the target virtual scene may not include external objects of this closed space environment. During the movement of the target object, the target object may move out of the closed space environment, making the target object no longer exists in the target virtual scene, and thus unable to continue to be presented in the real environment. In this case, the user may suddenly fail to see the target object in the real environment, but cannot promptly know the reason for the disappearance of the target object.

Therefore, in order to ensure the user's immersive interactive experience in the real environment, in the present disclosure, based on the spatial size of the target virtual scene, a corresponding safety zone may be divided in the real environment, with the spatial origin in the real environment representing the position of the virtual camera in the target virtual scene.

Then, after the target object is presented at the presentation position in the real environment, it may further be determined whether the presentation position of the target object is on the boundary of the safety zone in the real environment, so as to analyze whether the target object moves out of the spatial environment corresponding to the target virtual scene.

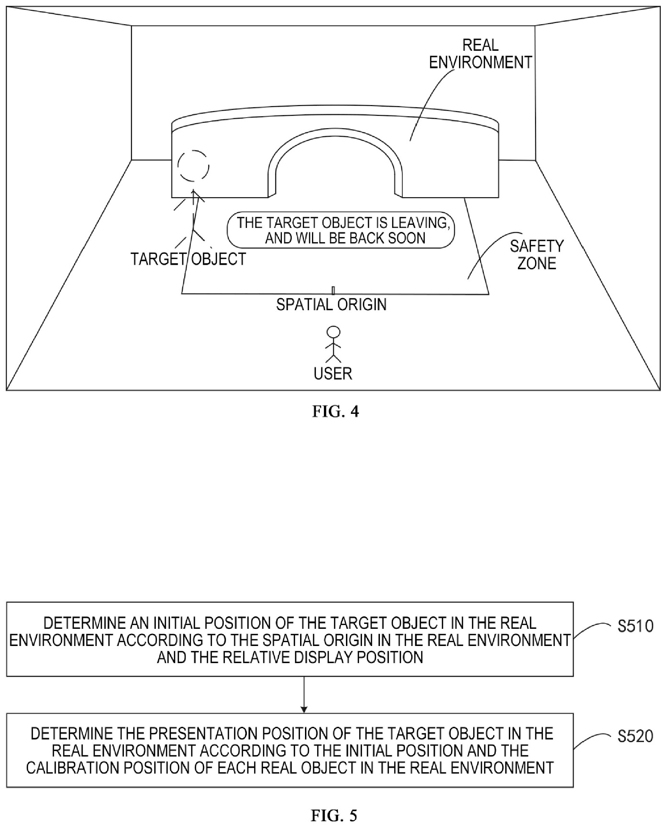

If the presentation position of the target object is on the boundary of the safety zone in the real environment, it indicates that the target object will move out of the spatial environment corresponding to the target virtual scene, such that the target object may no longer be presented in the real environment immediately. Therefore, in the present disclosure, when the target object is presented at the presentation position in the real environment, the fade-out effect of the target object may be further presented in the real environment. As shown in FIG. 4, the fade-out effect may include gradually increasing the transparency of the target object in the real environment, causing it to gradually become transparent, and presenting a prompt message of "the target object is leaving, and will be back soon" in the real environment to remind the user to wait for the target object to return to the target virtual scene, thereby ensuring the immersive interactive experience of the user in the real environment.

In some implementations, the boundary of the safety zone in the real environment may be determined by determining the boundary of the safety zone in the real environment according to a spatial boundary of the target virtual scene and the spatial origin in the real environment.

That is, when the preset operation instruction input via the one or more input components is detected, in the present disclosure, corresponding feature analysis may be performed on the real-time scene image of the target virtual scene at the current moment, to extract scene boundary feature points in the real-time scene image. Then, the spatial boundary of the target virtual scene may be determined by representing the relative position relationship between each scene boundary feature point and the virtual camera based on the relative display position of each scene boundary feature point.

Based on the relative position relationship between the scene boundary feature point and the virtual camera represented by the relative display position of each of the scene boundary feature points in the spatial boundary of the target virtual scene, and in combination with the virtual camera position represented by the spatial origin in the real environment, the mapping point position of each scene boundary feature points in the real environment may be determined, so as to form the corresponding safety zone in the real environment and obtain the corresponding boundary of the safety zone.

According to the technical solutions provided by the embodiments of the present disclosure, the presentation position of the target object in the real environment is analyzed based on the spatial origin in the real environment and the relative display position of the target object, such that the target object may be accurately presented at the presentation position in the real environment. Thus, on the basis of ensuring the diversity of interactive scenes, the accurate presentation of the target object in the real environment can be improved, the interactive interest between the user and the target object can be enhanced, and the immersive interactive experience of the user with respect to the target object in the real environment can be improved.

According to one or more embodiments in the present disclosure, after completing the accurate switching of the target object from the target virtual scene to the real environment via the display generation component, various real objects may be presented in the switched real environment, and the target object (such as the live streamer) may move continuously in the target virtual scene, such that the target object may also move continuously in the real environment.

This illustrates that the target object may have a position overlap with a corresponding real object in the real environment. In order to ensure the presentation authenticity of the target object in the real environment, it is required to avoid such overlap between the target object and the real objects in the real environment as much as possible.

Therefore, in order to prevent the position overlap between the target object and the real objects in the real environment, in the present disclosure, a calibration position of each real object in the real environment may be determined in response to an object calibration operation in the real environment.

That is, after the target virtual scene is switched and displayed as the real environment via the display generation component, the user may be supported to perform spatial calibration on each real object in the real environment by triggering a calibration control in a see-through function.

In the present disclosure, after a trigger operation on the calibration control is detected, each real object in the real environment may be controlled to enter an object calibration state, so as to support the user to perform a corresponding object calibration operation on each real object by manipulating a physical controller such as a handle. In this case, for each real object in the real environment, in the present disclosure, the object calibration operation applied by the user to the real object may be detected in real time, and position analysis may be performed on the object calibration operation, such that the position of the real object in the real environment may be obtained as the calibration position of the real object in the present disclosure.

According to the same calibration method as described above, the calibration position of each real object in the real environment may be determined.

Subsequently, when the target object in the target virtual scene needs to be presented in the real environment, as shown in FIG. 5, the presentation position of the target object in the real environment may be determined by the present disclosure through the following steps.

At block S510, an initial position of the target object in the real environment is determined according to a spatial origin in the real environment and the relative display position.

In order to avoid the overlap between the target object and each real object when the target object is presented in the real environment, in the present disclosure, the relative display position of the target object relative to the virtual camera may be determined. Then, based on the position of the virtual camera represented by the spatial origin in the real environment, and in combination with the relative position relationship between the target object and the virtual camera which is represented by the relative display position of the target object, the initial position of the target object in the real environment may be preliminarily determined to determine whether there is a position overlap between the initial position of the target object and each real object in the real environment.

At block S520, the presentation position of the target object in the real environment is determined according to the initial position and the calibration position of the real object in the real environment.

After the initial position of the target object in the real environment is determined, by comparing the difference between the initial position and the calibration position of each real object in the real environment, it may be determined whether a position overlap occurs between the target object and each real object when the target object is presented at the initial position.

If the target object, when presented at the initial position, does not overlap in position with any real object, the initial position may be directly used as the presentation position of the target object in the real environment.

If the target object, when presented at the initial position, overlaps in position with a certain real object, a spatial range occupied by each real object in the real environment may be determined according to the calibration position of each real object. Accordingly, the initial position of the target object may be adjusted accordingly to re-determine the presentation position of the target object in the real environment outside the spatial range occupied by each real object, thereby avoiding the position overlap between the target object and each real object when the target object is presented in the real environment.

In some other embodiments, after the target object is presented in the real environment, in order to ensure normal interaction in the real environment, the user may be supported to perform a corresponding drag-and-drop operation on the target object, so as to enhance the interaction diversity of the target object in the real environment.

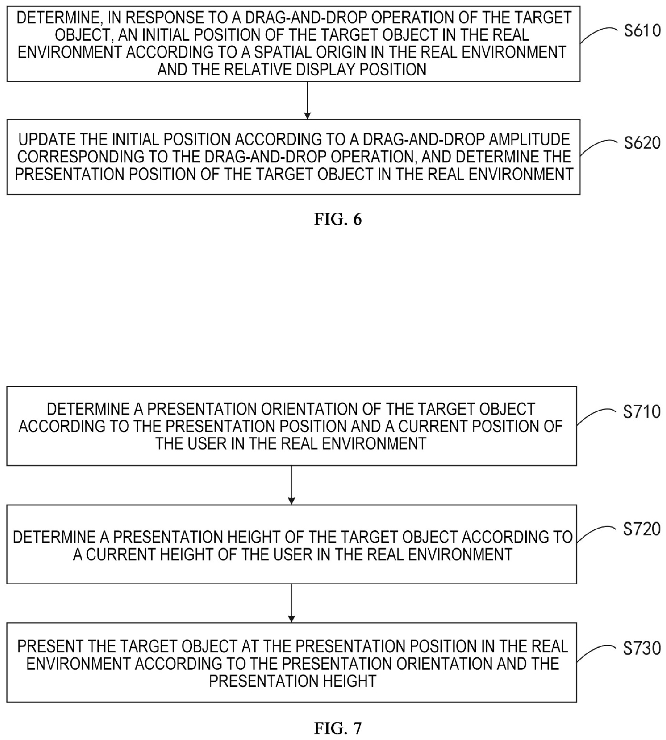

It may be seen that in the real environment, the target object may move correspondingly in the real environment under the drag-and-drop operation of the user. Therefore, as shown in FIG. 6, the presentation position of the target object in the real environment may also be determined through the following steps.

At block S610, in response to a drag-and-drop operation of the target object, an initial position of the target object in the real environment is determined according to a spatial origin in the real environment and the relative display position.

After the target object is continuously presented in the real environment, the user may drag and drop the target object presented at the previous moment to express the user's intention for presentation of the target object in the real environment. Accordingly, the presentation position of the target object that needs to be presented during the drag-and-drop process may be re-planned.

Therefore, when the drag-and-drop operation of the user on the target object is detected, in the present disclosure, the relative display position of the target object relative to the virtual camera may be determined. Then, based on the position of the virtual camera represented by the spatial origin in the real environment, and in combination with the relative position relationship between the target object and the virtual camera which is represented by the relative display position of the target object, the initial position of the target object in the real environment may be preliminarily determined. This can facilitate the subsequent re-planning of the presentation position of the target object in the real environment on the basis of the initial position of the target object in accordance with the presentation intention expressed by the user's drag-and-drop operation on the target object.

At block S620, the initial position is updated according to a drag-and-drop amplitude corresponding to the drag-and-drop operation, and the presentation position of the target object in the real environment is determined.

After the initial position of the target object in the real environment is determined, by analyzing the drag-and-drop operation of the user on the target object, the drag-and-drop amplitude corresponding to the drag-and-drop operation may be determined, and the drag-and-drop amplitude may represent a degree of the position change of the target object in the real environment. Then, according to the degree of the position change represented by the drag-and-drop amplitude, the presentation position of the target object in the real environment may be obtained by adjusting the initial position of the target object in the real environment.

It should be understood that for the presentation position of the target object in the real environment, the present disclosure may also combine the above two solutions. That is, the initial position of the target object in the real environment may be adjusted according to both the drag-and-drop amplitude corresponding to the drag-and-drop operation of the target object and the calibration position of each real object, to re-determine the presentation position of the target object in the real environment, thereby ensuring the accurate presentation of the target object in the real environment.

In the present disclosure, after the presentation position of the target object in the real environment is determined, the target object may be projected to the presentation position in the real environment to accurately present the target object in the real environment.

However, since the target object is presented in the real environment with respect to the spatial origin representing the virtual camera in the real environment, and the user may move continuously in the real environment, when viewing the target object from the user's perspective in the real environment, the target object may suffer from the viewing distortion due to not being presented toward the user.

Therefore, in order to improve the presentation authenticity of the target object in the real environment, as shown in FIG. 7, in the present disclosure, the presentation of the target object may be implemented through the following steps.

At block S710, a presentation orientation of the target object is determined according to the presentation position and a current position of the user in the real environment.

After the presentation position of the target object in the real environment is determined, since the target object is presented in the real environment with respect to the spatial origin representing the position of the virtual camera in the real environment, in order to avoid distortion when the target object is viewed from the user's perspective, in the present disclosure, the position of the user in the real environment may be determined in real time, which may serve as the user's current position in the present disclosure.

Then, according to the relative relationship between the presentation position of the target object and the user's current position, the target object may be controlled to be switched from the direction toward the spatial origin to the direction toward the user, thereby determining the presentation orientation of the target object.

In some implementations, in the present disclosure, the presentation orientation of the target object may be determined by: determining a viewing angle rotation value of the user with respect to the target object according to the presentation position, the spatial origin and the current position of the user in the real environment; and determining the presentation orientation of the target object according to the viewing angle rotation value and a predetermined angle rotation threshold.

That is, after the presentation position of the target object in the real environment is determined, in the real environment, a position point corresponding to the presentation position may be respectively connected to the spatial origin and a position point corresponding to the user's current position in the real environment, so as to obtain a first connecting line between the position point corresponding to the presentation position and the spatial origin, and a second connecting line between the position point corresponding to the presentation position and the position point corresponding to the user's current position. Accordingly, an included angle between the first connecting line and the second connecting line may be determined, which may serve as an orientation rotation angle of the target object when the target object is switched from the direction toward the spatial origin to the direction toward the user's current position, that is the viewing angle rotation value of the user with respect to the target object in the present disclosure.

If the viewing angle rotation value is small, there is little difference between viewing the target object from the user perspective and viewing the target object from the spatial origin. Therefore, in order to ensure the presentation efficiency of the target object, in the present disclosure, an angle rotation threshold may be preset to represents a maximum rotation angle at which the target object may be supported to be viewed from the user perspective without distortion.

Therefore, after the viewing angle rotation value of the user with respect to the target object is determined, in the present disclosure, by comparing the viewing angle rotation value with the predetermined angle rotation threshold, it may be determined whether there will be distortion if the target object is presented toward the spatial origin.

If the viewing angle rotation value is less than or equal to the predetermined angle rotation threshold, it indicates that even if the target object is presented toward the spatial origin, no distortion will occur when the target object is viewed from the user's perspective. Then, there is no need to change the orientation of the target object, and the presentation orientation of the target object may be determined to be still the direction toward the spatial origin.

If the viewing angle rotation value is greater than the predetermined angle rotation threshold, it indicates that if the target object is presented toward the spatial origin, distortion will occur when the target object is viewed from the user's perspective. Therefore, in the present disclosure, the target object may be controlled to be switched from the direction toward the spatial origin to the direction toward the user, thereby determining that the presentation orientation of the target object is the direction toward the user's current position.

At block S720, a presentation height of the target object is determined according to the user's current height in the real environment.

Since the user may perform squatting and standing movements in the real environment, from the user's perspective, there may be situations where the target object presented in the real environment is viewed from a high or low angle relative to the user's perspective, which still causes the viewing distortion of the target object.

Therefore, in order to ensure the accurate presentation of the target object, in the present disclosure, various movements of the user in the real environment may be detected in real time to determine the user's current height in the real environment. Then, by comparing the height of the target object with the user's current height, the target object may be controlled to be presented at a height flush with the user's horizontal line of sight, thereby determining the presentation height of the target object. This avoids the user from viewing the target object from an upward or downward angle, preventing the viewing distortion of the target object.

At block S730, the target object is presented at the presentation position in the real environment according to the presentation orientation and the presentation height.

After the presentation orientation and the presentation height of the target object are determined, the target object may be projected at the presentation position of the target object in the real environment according to the presentation orientation and the presentation height, such that the target object may be presented in the real environment in the direction toward the user and at the height flush with the horizontal line of sight of the user, thereby ensuring the immersive interaction effect when the target object is presented in the real environment.

According to the technical solutions provided by the embodiments of the present disclosure, the target virtual scene may be displayed via the display generation component, and when the preset operation instruction input via the one or more input components is detected, the target virtual scene may be switched and displayed as the real environment where the user is currently located via the display generation component, and the target object in the target virtual scene is displayed in the real environment, thereby realizing accurate switching and displaying of the target object from the target virtual scene to the real environment. It can enable the target object in the target virtual scene to enter the real environment to interact with the user, thereby ensuring the diversity of interactive scenes of the user with respect to the target object, enhancing the interactive interest between the target object and the user, and improving the immersive interactive experience of the user with respect to the target object in the real environment.

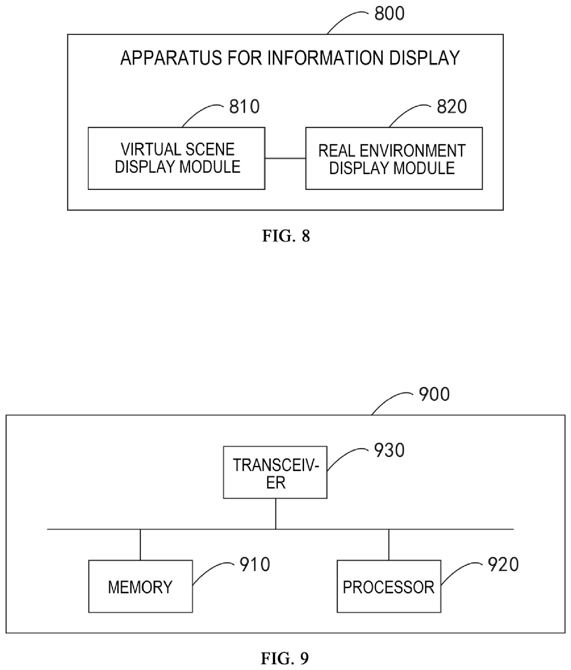

FIG. 8 is a schematic diagram of an apparatus for information display provided by an embodiment of the present disclosure. The information display apparatus 800 may be configured on an electronic device in communication with a display generation component and one or more input components. The information display apparatus 800 includes: a virtual scene display module 810 configured to display a target virtual scene via the display generation component, where the target virtual scene includes a target object; and a real environment display module 820 configured to display, in response to a preset operation instruction input via the one or more input components, a real environment where a user is currently located via the display generation component, and present the target object in the real environment.

In some implementations, the real environment display module 820 may include: a target object determination unit configured to determine a relative display position of the target object in the target virtual scene; a presentation position determination unit configured to determine a presentation position of the target object in the real environment according to a spatial origin in the real environment and the relative display position, where the spatial origin is a spatial position of the user in the real environment when the preset operation instruction is detected; and a target object presentation unit configured to present the target object in the real environment according to the presentation position.

In some implementations, the target object presentation unit may include: a presentation orientation determination subunit configured to determine a presentation orientation of the target object according to the presentation position and a current position of the user in the real environment; a presentation height determination subunit configured to determine a presentation height of the target object according to a current height of the user in the real environment; and a target object presentation subunit configured to present the target object at the presentation position in the real environment according to the presentation orientation and the presentation height.

In some implementations, the presentation orientation determination subunit may be further configured to: determine a viewing angle rotation value of the user with respect to the target object according to the presentation position, the spatial origin and the current position of the user in the real environment; and determine the presentation orientation of the target object according to the viewing angle rotation value and a predetermined angle rotation threshold.

In some implementations, the information display apparatus 800 may further include: a real object calibration module configured to determine a calibration position of a real object in the real environment in response to an object calibration operation in the real environment.

In some implementations, the presentation position determination unit may be further configured to: determine an initial position of the target object in the real environment according to the spatial origin in the real environment and the relative display position; and determine the presentation position of the target object in the real environment according to the initial position and the calibration position of the real object in the real environment.

In some implementations, the presentation position determination unit may be further configured to: determine in response to a drag-and-drop operation of the target object, an initial position of the target object in the real environment according to the spatial origin in the real environment and the relative display position; and update the initial position according to a drag-and-drop amplitude corresponding to the drag-and-drop operation, and determine the presentation position of the target object in the real environment.

In some implementations, the information display apparatus 800 may further include: a penetration effect presentation module configured to present a penetration effect of the target object in the real environment in response to a relative distance between the presentation position and the current position of the user in the real environment being less than a preset distance threshold,.

In some implementations, the information display apparatus 800 may further include: a fade-out effect presentation module configured to present a fade-out effect of the target object image in the real environment in response to the presentation position being on a boundary of a safety zone in the real environment.

In some implementations, the information display apparatus 800 may further include a safety zone determination module. The safety zone determination module may be configured to determine the boundary of the safety zone in the real environment according to a spatial boundary of the target virtual scene and the spatial origin in the real environment.

In some implementations, the target virtual scene is a live video stream of any live streaming room, and the live video stream is a 3D video stream of 180°.

In some implementations, the target object is a target object image in a real-time live streaming frame of the live video stream.

In some implementations, the information display apparatus 800 may further include a target object image determination module. The target object image determination module may be configured to obtain the corresponding target object image by performing keying processing on the target object in the real-time live streaming frame of the live video stream.

In some implementations, the target object at least includes a human object in the target virtual scene.

In some implementations, the preset operation instruction input via the one or more input components includes at least one of: a first operation instruction generated based on preset handle control information input by a user handle; a second operation instruction generated based on a preset gesture initiated by a hand of the user; a third operation instruction generated based on preset eye movement information initiated by eyes of the user; and a fourth operation instruction generated based on preset voice information collected by any voice collection component.

In the embodiments of the present disclosure, the target virtual scene may be displayed via the display generation component, and when the preset operation instruction input via the one or more input components is detected, the target virtual scene may be switched to and displayed as the real environment where the user is currently located via the display generation component, and the target object in the target virtual scene is displayed in the real environment, thereby realizing accurate switching and displaying of the target object from the target virtual scene to the real environment. It can enable the target object in the target virtual scene to enter the real environment to interact with the user, thereby ensuring the diversity of interactive scenes of the user with respect to the target object, enhancing the interactive interest between the target object and the user, and improving the immersive interactive experience of the user with respect to the target object in the real environment.

It should be understood that the apparatus embodiment may correspond to the method embodiment in the present disclosure. For similar descriptions, reference may be made to the method embodiment in the present disclosure. To avoid repetitions, details are not described herein again.

Specifically, the apparatus 800 shown in FIG. 8 may perform any method embodiment provided in the present disclosure, and the foregoing and other operations and/or functions of the modules in the apparatus 800 shown in FIG. 8 are respectively intended to implement the corresponding procedures of the above method embodiments, which are not repeated herein for the sake of brevity.

The above method embodiments of the embodiments of the present disclosure are described above with reference to the drawings from the perspective of functional modules. It should be understood that the functional modules may be implemented in hardware, or in instructions in software, or in a combination of hardware and software modules. Specifically, the steps in the method embodiments of the embodiments of the present disclosure may be completed by a hardware integrated logic circuit in a processor and/or the instructions in the form of software. The steps of the method disclosed in combination with the embodiments of the present disclosure may be directly embodied to be completed by a hardware decoding processor or by a combination of hardware in the decoding processor and a software module. Optionally, the software module may be located in a mature storage medium in the art, such as a random access memory, a flash memory, a read-only memory, a programmable read-only memory, an electrically erasable programmable memory, or a register. The storage medium is located in a memory. The processor reads information in the memory and completes the steps in the above method embodiments in combination with the hardware of the processor.

FIG. 9 is a schematic block diagram of an electronic device provided by an embodiment of the present disclosure.

As shown in FIG. 9, the electronic device 900 may include: a memory 910 and a processor 920, where the memory 910 is configured to store a computer program and transmit the program code to the processor 920. In other words, the processor 920 may invoke and run the computer program from the memory 910 to implement the method in the embodiments of the present disclosure.

For example, the processor 920 may be configured to perform the above method embodiment according to instructions in the computer program.

In some embodiments of the present disclosure, the processor 920 may include but not limited to: a general-purpose processor, a digital signal processor (DSP), an application specific integrated circuit (ASIC), a field programmable gate array (FPGA) or other programmable logic devices, a discrete gate or transistor logic device, a discrete hardware component, etc.

In some embodiments of the present disclosure, the memory 910 includes but is not limited to: a volatile memory or a non-volatile memory. The non-volatile memory may be a read-only memory (ROM), a programmable read-only memory (PROM), an erasable programmable read-only memory (EPROM), an electrically erasable programmable read-only memory (EEPROM) or a flash memory. The volatile memory may be a random access memory (RAM), which is used as an external cache. By way of example but not restrictive description, many forms of RAMs may be used, such as a static random access memory (SRAM), a dynamic random access memory (DRAM), a synchronous dynamic random access memory (SDRAM), a double data rate synchronous dynamic random access memory (DDR SDRAM), an enhanced synchronous dynamic random access memory (ESDRAM), a synch link dynamic random access memory (SLDRAM) and a direct Rambus random access memory (DR RAM).

In some embodiments of the present disclosure, the computer program may be divided into one or more modules, and the one or more modules are stored in the memory 910 and executed by the processor 920 to implement the method provided by the present disclosure. The one or more modules may be a series of computer program instruction segments capable of implementing specific functions, and the instruction segments are used to describe the execution process of the computer program in the electronic device 900.

As shown in FIG. 9, the electronic device may further include a transceiver 930, and the transceiver 930 may be connected to the processor 920 or the memory 910.

The processor 920 may control the transceiver 930 to communicate with other devices, specifically to send information or data to other devices or to receive information or data sent by other devices. The transceiver 930 may include a transmitter and a receiver. The transceiver 930 may further include an antenna, and the number of the antenna may be one or more.

It should be understood that the components of the electronic device 900 are connected to each other through a bus system. In addition to a data bus, the bus system further includes a power bus, a control bus and a status signal bus.

The present disclosure further provides a computer storage medium having a computer program stored thereon, where the computer program, when executed by a computer, causes the computer to implement the method of the above method embodiment.

An embodiment of the present disclosure further provides a computer program product including instructions, where the instructions, when executed by a computer, cause the computer to implement the method of the above method embodiment.

When implemented in software, all or part of the embodiments may be implemented in the form of the computer program product. The computer program product includes one or more computer instructions. When the computer program instructions are loaded and executed on a computer, all or part of the processes or functions according to the embodiments of the present disclosure are generated. The computer may be a general-purpose computer, a dedicated computer, a computer network, or other programmable apparatus. The computer instructions may be stored in a computer-readable storage medium or may be transmitted from one computer-readable storage medium to another computer-readable storage medium. For example, the computer instructions may be transmitted from one website, computer, server or data center to another website, computer, server or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a digital video disc (DVD)), a semiconductor medium (for example, a solid state disk (SSD)), etc.

The above descriptions are only specific embodiments of the present disclosure, but are not intended to limit the protection scope of the present disclosure. Any variation or replacement readily figured out by those skilled in the art within the technical scope disclosed in the present disclosure shall fall within the protection scope of the present disclosure. Therefore, the protection scope of the present disclosure shall be subject to the protection scope of the claims.

## Claims

1. A method for information display, applied to an electronic device in communication with a display generation component and one or more input components, the method comprising:
displaying a target virtual scene via the display generation component, the target virtual scene comprising a target object; and
displaying, in response to a preset operation instruction input via the one or more input components, a real environment where a user is currently located via the display generation component, and presenting the target object in the real environment.

2. The method of claim 1, wherein presenting the target object in the real environment comprises:
determining a relative display position of the target object in the target virtual scene;
determining a presentation position of the target object in the real environment according to a spatial origin in the real environment and the relative display position, the spatial origin being a spatial position of the user in the real environment when the preset operation instruction is detected; and
presenting the target object in the real environment according to the presentation position.

3. The method of claim 2, wherein presenting the target object in the real environment according to the presentation position comprises:
determining a presentation orientation of the target object according to the presentation position and a current position of the user in the real environment;
determining a presentation height of the target object according to a current height of the user in the real environment; and
presenting the target object at the presentation position in the real environment according to the presentation orientation and the presentation height.

4. The method of claim 3, wherein determining the presentation orientation of the target object according to the presentation position and the current position of the user in the real environment comprises:
determining a viewing angle rotation value of the user with respect to the target object according to the presentation position, the spatial origin and the current position of the user in the real environment; and
determining the presentation orientation of the target object according to the viewing angle rotation value and a predetermined angle rotation threshold.

5. The method of claim 2, further comprising:
determining a calibration position of a real object in the real environment in response to an object calibration operation in the real environment.

6. The method of claim 5, wherein determining the presentation position of the target object in the real environment according to the spatial origin in the real environment and the relative display position comprises:
determining an initial position of the target object in the real environment according to the spatial origin in the real environment and the relative display position; and
determining the presentation position of the target object in the real environment according to the initial position and the calibration position of the real object in the real environment.

7. The method of claim 2, wherein determining the presentation position of the target object in the real environment according to the spatial origin in the real environment and the relative display position comprises:
determining, in response to a drag-and-drop operation of the target object, an initial position of the target object in the real environment according to the spatial origin in the real environment and the relative display position; and
updating the initial position according to a drag-and-drop amplitude corresponding to the drag-and-drop operation, and determining the presentation position of the target object in the real environment.

8. The method of claim 2, wherein after presenting the target object in the real environment according to the presentation position, the method further comprises:
presenting a penetration effect of the target object in the real environment in response to a relative distance between the presentation position and a current position of the user in the real environment being less than a preset distance threshold.

9. The method of claim 2, wherein after presenting the target object in the real environment according to the presentation position, the method further comprises:
presenting a fade-out effect of the target object in the real environment in response to the presentation position being on a boundary of a safety zone in the real environment.

10. The method of claim 9, wherein the boundary of the safety zone in the real environment is determined by:
determining the boundary of the safety zone in the real environment according to a spatial boundary of the target virtual scene and the spatial origin in the real environment.

11. The method of claim 1, wherein the target virtual scene is a live video stream of any live streaming room, the live video stream being a 3D video stream of 180°.

12. The method of claim 11, wherein the target object is a target object image in a real-time live streaming frame of the live video stream.

13. The method of claim 12, wherein the target object image is determined by:
obtaining the target object image by performing keying processing on the target object in the real-time live streaming frame of the live video stream.

14. The method of claim 1, wherein the target object at least comprises a human object in the target virtual scene.

15. The method of claim 1, wherein the preset operation instruction input via the one or more input components comprises at least one of:
a first operation instruction generated based on preset handle control information input by a user handle;
a second operation instruction generated based on a preset gesture initiated by a hand of the user and detected by a hand detection component;
a third operation instruction generated based on preset eye movement information initiated by eyes of the user and detected by an eye detection component, and a preset gesture initiated by a hand and detected by a hand detection component; or
a fourth operation instruction generated based on preset voice information collected by any voice collection component.

16. An apparatus for information display, configured on an electronic device in communication with a display generation component and one or more input components, the apparatus comprising:
a virtual scene display module configured to display a target virtual scene via the display generation component, the target virtual scene comprising a target object; and
a real environment display module configured to display, in response to a preset operation instruction input via the one or more input components, a real environment where a user is currently located via the display generation component, and present the target object in the real environment.

17. An electronic device, comprising:
a processor; and
a memory configured to store executable instructions of the processor,
wherein the processor is configured to, by executing the executable instructions, perform the method for information display of any of claims 1 to 15.

18. A computer-readable storage medium having storing thereon a computer program that, when executed by a processor, causes the method for information display of any of claims 1 to 15 to be performed.

19. A computer program product comprising instructions, the computer program product, when executed by an electronic device, causing the electronic device to perform method for information display of any of claims 1 to 15.
